Europäisches Patentamt

European Patent Office

Office européen des brevets

(11) Publication number: **0 280 988**
A2

# (12) EUROPEAN PATENT APPLICATION

(21) Application number: 88102593.6

(22) Date of filing: 23.02.88

(51) Int. Cl.⁴: **G02B 6/38** , G02B 6/44

(30) Priority: 02.03.87 IT 1954387

(43) Date of publication of application:
07.09.88 Bulletin 88/36

(84) Designated Contracting States:
CH DE ES FR GB GR LI LU NL SE

(71) Applicant: SOCIETA' CAVI PIRELLI S.p.A.
Piazzale Cadorna 5
I-20123 Milano(IT)

(72) Inventor: Gazzana Priaroggia, Paolo
Piazza S. Ambrogio, 8
Milan(IT)

(74) Representative: Mariani, Giorgio, Dr. et al
INDUSTRIE PIRELLI S.p.A. Direzione Brevetti
Piazzale Cadorna, 5
I-20123 Milano(IT)

(54) Joint for telecommunication cables comprising optical fibers.

(57) A joint according to the invention connects together two submarine cables(2,5) comprising optical fibers(4,7), the armour(3) of one cable(2) being radially inner with respect to the assembly formed by the optical fibers(4) and the armour(6) of the other cable(5) being radially outer with respect to said assembly(7).

In the joint the mechanical connection between the armours (3,6) of the two cables(2,5) is obtained by securing them to a plate(1) provided with openings (25) to allow the passage of the final portions of the optical fibers (4,7) contained in the cables(2,5) in view of their mutual connection.

Fig. 1

EP 0 280 988 A2

## JOINT FOR TELECOMMUNICATION CABLES COMPRISING OPTICAL FIBERS

The present invention concerns joints used to connect together two telecommunication cables comprising optical fibers, which have mechanically resistant armours of different type.

In particular, the invention relates to a joint to connect together a submarine telecommunication cable comprising optical fibers, in which the resistant armour is totally arranged in the radially innermost portion of the cable and is therefore radially inner to the cable portion containing the optical fibers, and a submarine telecommunication cable comprising optical fibers in which the mechanically resistant armour surrounds the cable portion containing the optical fibers.

A joint in accordance with the invention is also able to carry out the connection of a submarine cable comprising optical fibers, for instance of a first type in which the latter surround its mechanically resistant armour, with the ends of opto-electronic repeaters formed by portions of cables comprising optical fibers, for instance of a second type, in which a mechanically resistant armour surrounds said optical fibers.

Further, it is possible to connect cables of the second type with the ends of opto-electronic repeaters formed by portions of cables of the first type.

The conventional joints used for the connection of submarine telecommunication cables comprising optical fibers can be divided into two groups.

A first group of conventional joints is intended to connect together cables in which the mechanically resistant armour is situated in the cable radially innermost portion.

The joints belonging to said first group, one of which is described for instance in the Italian Patent Application No.21 650 A/84 of the same Applicant, comprise - from the inside towards the outside - a metallic clamp or the like which connects end-to-end the mechanically resistant armours of the cables whose ends, in the joint area, are perfectly aligned to one another.

Around the metal clamp and to the end portion of the cable armours present in the joint there is a sleeve of plastic material, whose ends are fast with the ends of the cable cores containing the optical fibers, which is provided with a plurality of through cavities with axes parallel to the joint axis. The through cavities of the sleeve encase in a loose way the end portions of the optical fibers of the cable and their connections.

A sheath of plastic material or metallic material is arranged around the sleeve; the ends of said sheath are tightly connected to the cable sheaths.

When any space not containing material within the cable sheath is filled with a substantially incompressible fluid to impart to the cables a resistance to the hydrostatic pressure, not committing this task to the sheath, also any space free from material within the joint sheath is filled with an incompressible fluid. In this case the cable sheath does not show by itself any resistance to the compression due to the hydrostatic pressure, since said resistance is ensured by the complete filling of any space of the joint with the incompressible fluid.

The conventional joints belonging to the first group, as briefly described above, offer a high reliability since the connection between the optical fibers, being not hindered by the presence of an armour, can always be carried out in an accurate and correct manner.

However, an essential condition for the employment of the joints belonging to said first group is that the armours of the two cables being joined be aligned to each other and be radially inner to the portion occupied by the optical fibers.

Consequently, it is not possible to effect, by the conventional joints of the first group, the connection between a cable in which the armour is radially inner to the portion occupied by the optical fibers and a cable in which the armour is radially outer with respect to said portion, and this because in said two different types of cables the arrangement between the armour and the optical fibers is contrary to the above indicated essential condition concerning the use of joints belonging to the first group.

A second group of conventional joints comprises those intended to connect together cables in which the mechanically resistant armour is radially outer with respect to the portion containing the optical fibers and in which the resistance to the hydrostatic pressure is achieved by means of said mechanically resistant armour. The structure of the joints belonging to this second group - one of which is that described for instance in the European Patent Application No. 67673 - comprises a metal frame, resistant to tension and compression stresses, which incorporates a sealing casing for the joint, resistant by itself to the hydrostatic pressure.

The end of said metal frame carries - anchored to it by connection means aligned to one another - the components of the armours of the two cables, which are also aligned.

Further, at the end of said metal frame there are openings, surrounded by the above indicated means connecting the armours, into which are housed the cable cores containing the optical fibers.

The frame which, as said above, constitutes the sealing casing of the joint contains, housed into it, the end portions of the optical fibers and their connections.

A drawback shown by the joints of the second type is the difficulty encountered to carry out the necessary steps for the connection of the optical fibers, due to the presence of a frame of complicate structure which affects negatively their reliability.

Moreover, the joints for submarine cables belonging to the second group are intended only to connect together cables having their mechanically resistant armours in alignment and in radially outer position with respect to their portion containing the optical fibers.

In fact, an essential condition for the employment of the joints belonging to the second group is that the means which connect the components of the armours of the two cables to the joint body, besides being aligned to one another, are radially outer with respect to the openings for the entrance of the cable cores containing the optical fibers.

· Consequently, also by the joints of the second type it is not possible to connect a cable, where the mechanically resistant armour is radially inner with respect to the portion containing the optical fibers, with a cable where said mechanically resistant armour is radially outer to the portion containing the optical fibers; this is due to the fact that the two different types of cables being joined show a relative arrangement between the armour and the optical fibers which is contrary to the above indicated essential condition regarding the use of joints of the second group.

The present invention aims at providing a joint intended to connect two cables even of different diametrical dimensions in one of which the mechanically resistant armour is radially inner with respect to the portion containing the optical fibers whilst in the other said mechanically resistant armour is radially outer to the portion containing the optical fibers which, allowing an easy system of connection between the optical fibers, proves to be quite reliable.

Accordingly, the subject matter of the present application is a joint for telecommunication cables comprising optical fibers, used to connect a first cable of the type in which the mechanically resistant armour is radially inner to the portion containing the optical fibers with a second cable of the type in which the mechanically resistant armour is radially outer to the portion containing the optical fibers, said joint, comprising a body whose ends are tightly connected to the cable ends and containing the connections between the optical fibers of the cables themselves, being characterized in that it comprises a metal plate, enclosed in said body, which is provided with an element able to fasten the armour of the first cable and, around said first element, with a plurality of elements able to fasten the components of the armour of the second cable and uniformly distributed at least along a line closed on itself, at least one through opening for the passage of the optical fibers of the second cable being obtained in the plate, said through opening being situated in a radially intermediate position between the element fastening to the plate the armour of the first cable and the elements fastening to the plate the individual components of the armour of the second cable, the connections between the optical fibers of the two cables being carried out between the end of the first cable and the metal plate.

Further, in a joint forming the object of the invention, the body having its ends tightly connected to the ends of the cable sheaths is preferably constituted by a mass of polymeric material embedding, besides the cable ends, also the metal plate, the end portions of the cables connected to the latter and the end portions of the optical fibers and their connections.

The present invention will be better understood from the following detailed description, given only by way of non-limiting example and made with reference to the figures of the enclosed sheets of drawings, in which:

- figure 1 shows in longitudinal section a joint according to the invention,

- figure 2 shows in front view a particular of the joint of figure 1,

- figure 3 is a cross section taken along line III-III of figure 1,

- figure 4 is a cross section taken along line IV-IV of figure 1,

- figure 5 shows in longitudinal section an alternative embodiment of the joint according to the invention,

- figure 6 shows in front view a particular of the joint of figure 5, and

- figure 7 is a cross section taken along line VII-VII of figure 5.

A joint according to the invention is able to connect any cable, in particular a submarine cable, of the type in which the mechanically resistant armour occupies the radially innermost portion of the cable and is surrounded by optical fibers, with any cable, in particular a submarine cable, of the type in which the mechanically resistant armour surrounds the portion containing the optical fibers.

The essential element of a joint according to the invention is the presence of a metal plate having the following characteristics.

The metal plate must have, preferably but not necessarily at its own axis, an element to fasten to it the mechanically resistant armour of a cable of the type in which the latter is surrounded by optical fibers.

A further feature of the plate is that it must have, uniformly distributed along at least a line closed on itself, for instance a circumference, preferably but not necessarily coaxial to the plate axis, a plurality of elements for fastening the components, usually represented by wires and/or metal straps, which form the mechanically resistant armour of a cable of the type in which the latter surrounds the optical fibers.

A still further feature of the metal plate is that it must have at least one through opening of any shape, situated in a radially intermediate position between the elements fastening the two armours to the plate, to allow the exclusive passage of the optical fibers of the cable in which these are surrounded by the armour.

Once the above indicated essential conditions are complied with, the plate may have any structure and configuration, provided that it is able to withstand the mechanical stresses imparted to it by the cable armours.

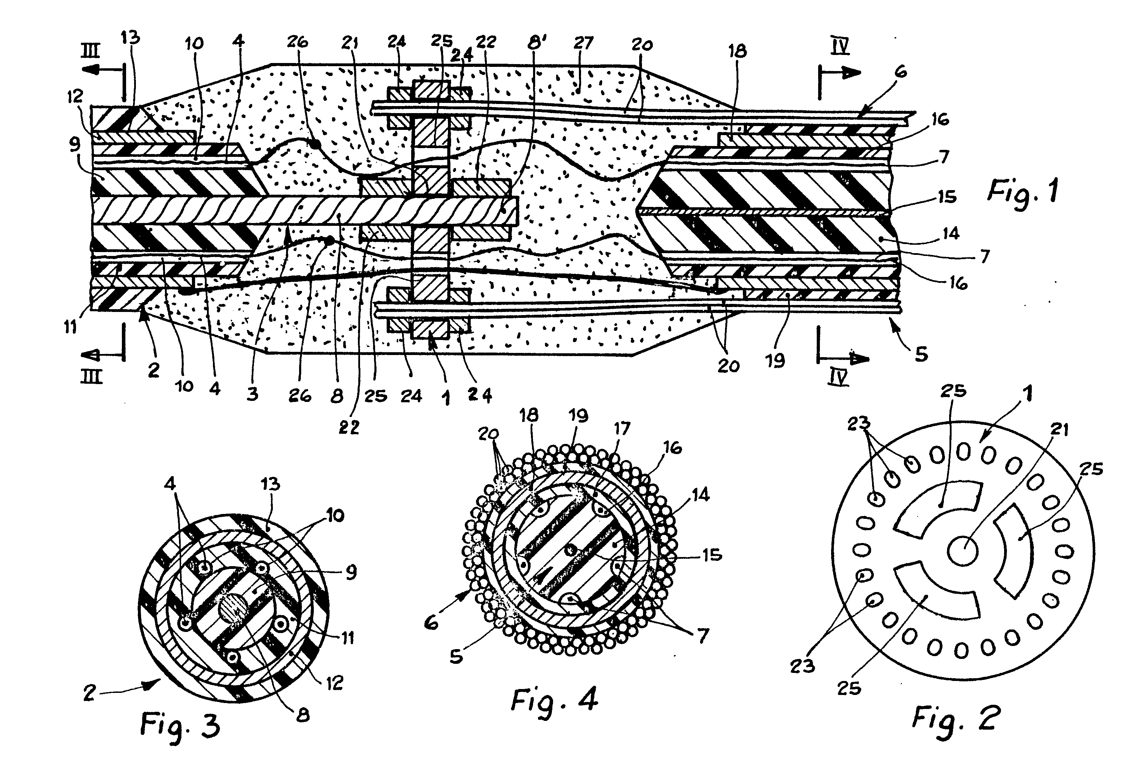

Figure 1 illustrates a particular embodiment of a joint in accordance with the invention. The joint incorporates a plate 1, described below, which fastens the armour 3, surrounded by the optical fibers 4 of a particular cable 2, and the armour 6, surrounding the optical fibers 7 of a particular cable 5.

Even if in the figure the cables 2 and 5 have an equal diameter, this is not to be considered as restrictive, since said cables may have different outer diameters.

The particular cable 2 of the joint shown in figure 1, whose cross section is represented in figure 3, has the following structure.

The radially innermost portion of the cable is occupied by a cord 8 shaped to withstand the mechanical stresses which are exerted during the cable laying or recovery.

The cord is surrounded by a layer 9 of plastic material around which is wound up a plurality of small tubes 10 loosely containing the optical fibers.

A layer 11 of plastic material embeds said tubes 10 at its radially innermost surface and is surrounded by a sheath 12, preferably made of metal, constituting the cable sheath. If the sheath 12 is made of metal, it is covered by a layer 13 of plastic material.

The particular cable 5 of the joint of figure 1, whose cross section is illustrated in figure 3, has - from the inside towards the outside - the following structure.

The radially innermost portion of the cable 5 is represented by a core constituted by a structural shape 14 of circular section, made of plastic material, which incorporates a reinforcing wire made for example of metallic material, glass fiber, aromatic polyamides and the like.

The wire 15 is not a component of the armour of cable 5, but is merely an element intended to prevent elongations in the structural shape or core 14 during its production and during the cable manufacture.

The outer surface of the shape or core 14 carries a plurality of grooves 16 having a helical path, for instance a close or an open helix, into which are loosely encased the optical fibers 7.

A layer 17 of plastic material which closes said grooves is present around the shape or core 14; onto it there is a sealing metal sheath 18 and any space not occupied by material, within the sheath, is preferably filled by an incompressible fluid, as for instance a silicone grease, a petroleum jelly and the like.

A mechanically resistant armour 6, formed by a plurality of metal wires 20, is arranged outside a covering 19, made of plastic material, of the metal sheath 18.

The joint of figure 1 shows the end portions of the optical fibers 4 and 7 and the end portions of the armours 3 and 6 respectively projecting from the ends of cables 2 and 5.

As said above, the armours 3 and 6 are fastened to the metal plate 1, whose side view is illustrated in figure 2.

As it can be seen from figures 1 and 2, said metal plate 1 is constituted by a disc having, at its own axis, a through opening 21 through which passes the end portion of cord 8 forming the armour 3 of cable 2.

On end 8' of rope or cord 8 is clamped a pair of metal clamps 22 whose diametrical dimensions are greater than hole 21 of the plate, obtaining in this way the connection of said cord 8 to the plate itself. However, this type of connection between the cord and the plate must not be considered as restrictive, since, for the purposes of the present invention, any fastening means or element can be used to connect the cord 8 or its component wires to the plate 1.

A plurality of slits 23, into which the wires 20 forming the mechanically resistant armour of cable 5 are inserted in pairs, is provided along the profile of the disc or plate 1 in uniformly spaced relationship and on a line closed on itself, constituted by a circumference.

The pairs of wires 20 are secured to one another and to the plate 1 by means of pairs of clamps 24 intended to ensure the connection of the components of the mechanically resistant armour 6 of cable 5 to the plate 1.

Also the above described connecting means must not be regarded as restrictive, because, for the purposes of the present invention, any means or element able to secure the wires 20 to the plate 1 can be employed.

According to an alternative embodiment not illustrated, in the plate 1 the slits are distributed along two coaxial circumferences and each of said slits contains an individual wire forming the armour of cable 5, which is blocked to the plate for instance by pairs of clamps identical to the pairs of clamps 24.

Through openings 25 are provided in a radially intermediate position between hole 21 and the slits 23 in the disc body; they have the task to allow only the optical fibers of cable 5, where the armour surrounds them, to pass disc 1 to be connected at 26 to the optical fibers of cable 2.

Preferably but not necessarily small tubes, not represented in figure 1, passing in openings 25, contain in a loose way the ends of the optical fibers of the cables and their connections.

In terms of the present invention the through openings 25 may have any shape; only by way of example in figure 2 said openings have the form of curved notches.

Further, when the sheaths 13 and 18 of cables 2 and 5 carry out the function of one of the electric conductors for the supply of the optoelectronic repeaters of the transmitted signals, a small bar 52, made for instance of copper, has its ends connected by welding to the sheaths and passes into one of holes 25 of plate 1.

In the joint shown in figure 1 the plate or disc 1, the end portion of the cord 8 outcoming from cable 2 anchored to the plate, the end portions of the wires 20 of armour 6 of cable 5 also anchored to the plate, the end portions of the optical fibers 4 and 7 with their connection in case housed into small tubes, the small bar 52 and the ends of cables 2 and 5 are embedded into a body 27 of substantially incompressible polymeric material, as for instance an epoxy resin, polyethylene and the like, which acts as a closing plug for the cables and forms the joint casing.

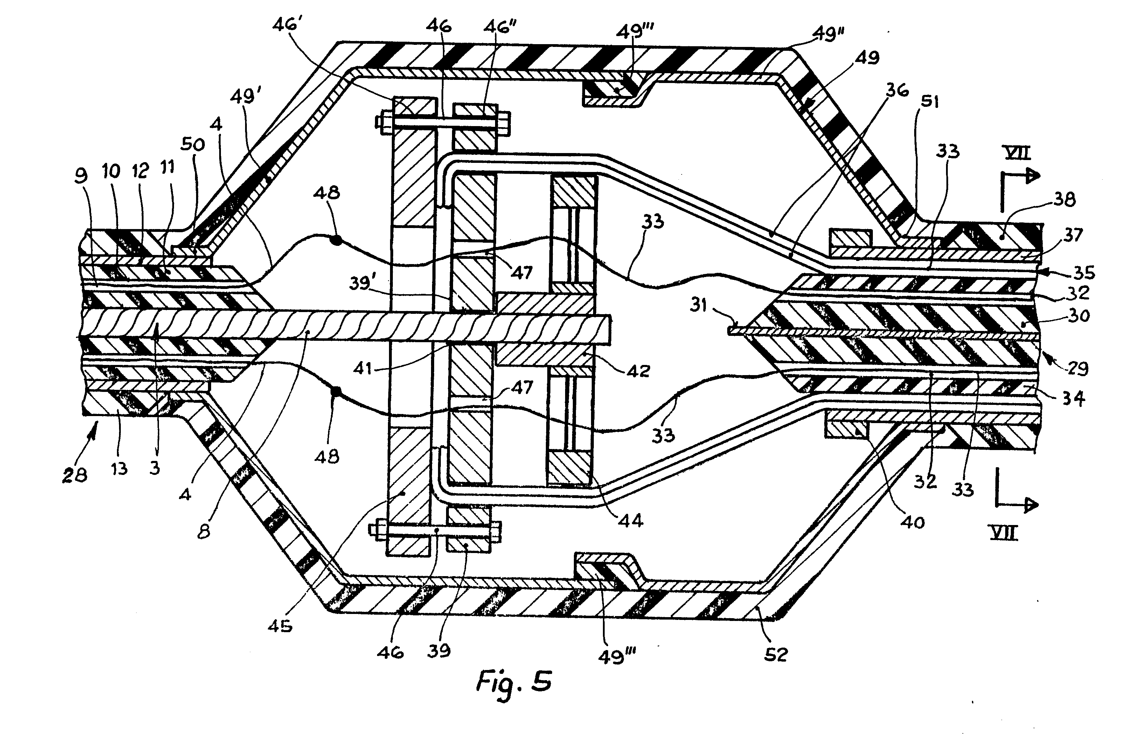

Figure 5 represents an alternative embodiment of a joint according to the invention which connects together a particular submarine cable 28 comprising optical fibers, of the type in which the mechanically resistant armour occupies the radially innermost position of the cable and is surrounded by the optical fibers and a particular submarine cable 29 comprising optical fibers, of the type in which the mechanically resistant armour is radially outer and surrounds the optical fibers. As it can be seen in figure 5, the two cables 28 and 29 have different diametrical dimensions.

In particular, cable 28 has a structure identical to that of cable 2, whose cross section is represented in figure 3.

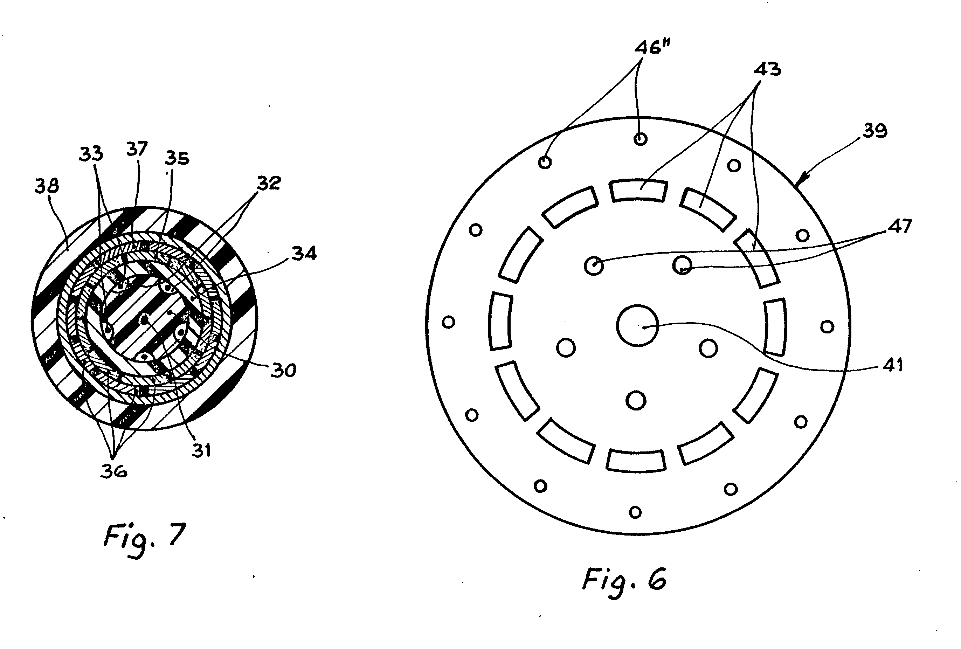

The particular cable 29, whose cross section is represented in figure 7, has - from the inside towards the outside - the following structure.

The radially innermost portion of cable 29 is occupied by a core constituted by a structural shape of circular section, made of plastic material, which incorporates a wire 31, made for instance of metal or of glass fiber or of an aromatic polyamide, said wire being not a component of the armour of cable 29 and having the only function to prevent any elongation of the core during its production and during the cable manufacture.

The outer surface of the shape or core 30 carries a plurality of grooves 32, having an helical path, for instance a close or an open helix, and loosely containing the optical fibers 33.

A layer 34 of plastic material surrounds the core 30, closing the grooves 33. Around said layer 34 there is the cable armour 35, which is formed by a plurality of metal straps 36 helically wound up on said core 30.

A metal sheath 37, representing the sealing sheath of the cable, is arranged around the plurality of straps 36; it is externally covered by a layer 38 of plastic material. Preferably, inside the cable sheath, any space free from material is filled by an incompressible fluid, as a silicone grease, a petroleum jelly and the like.

The joint of figure 5 shows - projecting from the ends of cables 28 and 29 - their respective armours 8 and 35 and their respective optical fibers 4 and 33.

Also the joint shown in figure 5 comprises a metal plate 39 to which are associated connecting means, considered below, for the two cable armours and in which are obtained through openings for the passage of the optical fibers 33, belonging to cable 29, which is of the type where the armour 35 surrounds the optical fibers.

A binding element, as for instance a blocking sleeve 40, is provided around armour 35 and at its end present in the joint of cable 29. The sleeve connects together the straps 36 forming the armour 35, avoiding any modification in the latter and imparting a correct position to the end portions of straps 36 projecting from the cable ends.

As said above, the joint shown in figure 5 comprises a plate 39, represented in front view in figure 6, to which are associated elements to fasten to it the mechanically resistant armours of the two cables 28 and 29.

The metal plate 39 is constituted by a disc having at its own axis a through hole 41 within which passes the end portion of cord 8 forming the mechanically resistant armour of cable 28.

A metal clamp 42 or the like is clamped on the end of cord 8. Said metal clamp 42, whose diametrical dimensions are greater than those of hole 41 of plate 39, blocks cord 8 on the latter, preventing its unthreading, and represents a particular embodiment - not to be considered as restrictive - of a fastening means of the cord to the plate.

Further, the plate 39 carries a plurality of slits 43, uniformly distributed along a closed line consisting of a circumference coaxial to the plate axis, into which are inserted in pairs the straps 36 forming the mechanically resistant armour 35 of cable 29.

An annular spacer 44, inserted on clamp 42, supports inside the joint the plurality of straps.

The end portions of the straps 36 are folded against face 39' of plate 39 which faces the end of cable 28.

A ring 45, situated in front of face 39' of plate 39, is fastened to the latter by bolts 46 or the like, inserted into holes 46' and 46" obtained at their respective profiles, and blocks the folded ends of straps 36 against plate 39, securing them to the latter.

In the joint illustrated in figure 5 the ring 45, associated to plate 39, constitutes only a particular non-limiting embodiment of the elements to block to the plate the components of the mechanically resistant armour of cable 29.

Moreover, the plate 39 carries a plurality of through openings 47, constituted for instance by circular holes and situated in an intermediate position between the hole 41 and the plurality of slits 43.

Into said through openings 47 pass the end portions of the optical fibers 33 of cable 29 to overcome plate 39.

Connections 48 connect the ends of the optical fibers 33 of cable 29 with the ends of the optical fibers 4 of cable 28; said connections are positioned in the space existing between plate 39 and the end of cable 28.

A box-shaped casing 49 of metallic material (or, if desired, of plastic material) has its ends 50 and 51 tightly secured, for instance by welding, to the metal sheaths 12 and 37 belonging respectively to cables 28 and 29, and encloses all the above described components of the joint.

The metal casing 49 is externally covered with a layer 52 of plastic material connected to the ends of the layers 13 and 38 of plastic material of cables 28 and 29, respectively.

The space defined by the box-like casing 49 which - even if it is metallic - does not show any resistance to the hydrostatic pressure, is completely filled with a polymeric material, as a casting plastic material, for instance an epoxy resin, which incorporates all the elements of the joint and acts as a closing plug for the ends of both cables.

If any space free from material inside cables 28 and 29 is filled with silicone grease, petroleum jelly and in general with a same polymeric material in the form of a viscous fluid having incompressibility characteristics, also the space inside the box-like casing 49 can be alternatively filled with the same viscous fluid which fills any space free from material inside the cables.

As said above, in the joint of figure 5 the box-like casing 49 is metallic. As illustrated in said figure, it is formed by two parts 49' and 49" tightly connected together with the interposition of a body 49''' of electrically insulating material.

The particular structure of the metal casing 49, consisting of two electrically separate parts, has the only task of allowing the electric connection between the mechanically resistant armours of the two cables (when they acts also as electric conductors) by means of the joint plate in order to provide one of the two conductors of the feeding circuit for the optoelectronic repeaters of the transmitted signals, the other conductor being represented by the sea.

According to an alternative embodiment, not illustrated, the metal casing 49 is devoid of discontinuity and a layer of insulating material placed between the clamp 42 and the plate 39 covers also the surface of hole 41 when the element of the two cables acting as a conductor of the feeding circuit for the optoelectronic repeaters is constituted by the metal sheaths, the other conductor being represented by the sea.

In general, as the two types of cables which may be connected by the joint according to the invention may have a different structure, and as also the elements acting in said cables as electric conductors may be different, many alternative methods may be followed by a technician skilled in this field to obtain by virtue of the joint an electric connection between the cables themselves.

From the description of the particular embodiments of joints according to the invention and from the following considerations it is evident that the invention achieves the proposed goals.

First of all, the use in the joint of a metal plate, interposed between the cable ends, to which the cable armours are fastened, permits to obtain a mechanical continuity between said armours, although they are mutually offset with respect to the joint axis.

Further, the provision of openings in the plate to allow the passage of the end portions of the optical fibers of the cable wherein they are surrounded by the armour facilitates the connection of said fibers to the optical fibers of the other cable, since said operation is carried out in a position where no obstacles are present, to the full advantage of the reliability of the connections and of the joint.

Further, the reliability of the joint is also ensured by the fact that the optical fibers - in their passage through the plate openings - maintain a substantially rectilinear path and consequently cannot be subjected to bending stresses which, as known, may damage them and may have a negative influence on the joint performance.

At last, the presence of a body of polymeric material, which incorporates the joint elements and the cable ends and acts as a plug for both cables, confers to the joint a high versatility.

In particular, the presence of said plug, which blocks the ends of the two cables, permits for instance to connect a cable of the type comprising a mechanically resistant armour, radially inner to the portion occupied by the optical fibers, in which the resistance to the hydrostatic pressure is obtained by filling any space free from material with an incompressible fluid, with a cable provided with a mechanically resistant armour surrounding the optical fibers and having also the task of withstanding the hydrostatic pressure.

Although only some embodiments of joints according to the invention have been described and illustrated, it is understood that the scope of the invention itself includes any other possible embodiment deriving from the above indicated inventive idea.

## Claims

1) A joint for telecommunication cables comprising optical fibers(4,7), used to connect a first cable(2) of the type in which the mechanically resistant armour(3) is radially inner to the portion containing the optical fibers(4) with a second cable-(5) of the type in which the mechanically resistant armour(6) is radially outer to the portion containing the optical fibers(7), said joint, comprising a body-(27) whose ends are tightly connected to the cable ends and containing the connections(26) between the optical fibers(4,7) of the cables themselves, being characterized in that it comprises a metal plate(1), enclosed in said body(27), which is provided with an element(22) able to fasten the armour(3) of the first cable(2) and, around said first element(22), with a plurality of elements(24) able to fasten the components(20) of the armour(6) of the second cable(5) and uniformly distributed at least along a line closed on itself, at least one through opening(25) for the passage of the optical fibers(7) of the second cable(5) being obtained in the plate-(1), said through opening(25) being situated in a radially intermediate position between the element-(22) fastening to the plate(1) the armour(3) of the first cable(2) and the elements(24) fastening to the plate(1) the individual components(2) of the armour(6) of the second cable(5), the connections-(26) between the optical fibers(4,7) of the two cables(2,5) being carried out between the end of the first cable(2) and the metal plate(1).

2) A joint as in claim 1, characterized in that the body(27) having its ends tightly connected to the cable ends and containing both the connections(26) between the optical fibers of the cables(4,7) and the metal plate(1) to which are fastened the armour(3) of the first cable(2) and the armour(6) of the second cable(5) is a substantially incompressible mass of polymeric material embedding said components, the end portions of the cable armours and the cable ends.

3) A joint as in claim 1, characterized in that the body having its ends tightly connected to the cable(28,29) ends comprises a casing(49), whose ends are tightly connected to the cable sheaths-(12,37), which encloses both the connections(48) between the cable optical fibers(9,33) and the metal plate(39) fastening the armours(8,35) of the first-(28) and of the second(29) cable, the space inside the casing being completely filled with a substantially incompressible polymeric material selected between a plastic material and an incompressible fluid.

4) A joint as in claim 1, characterized in that the element(22,21) connecting the metal plate(1) to the elements(8) forming the armour of the first cable(2) comprises a through hole(21), obtained at the plate(1) axis, through which passes the end of the armour(8) of the first cable(2) and at least one metal clamp(22) clamped on the armour(8) end, and in that the elements fastening the metal plate-(1) to the components(20) of the armour(6) of the second cable(5), distributed along a closed line constituted by a circumference coaxial to the plate-(1) axis, comprise a plurality of through slits(23) for the passage of said armour components(20) and at least a series of metal clamps(24) clamped on the ends of said components(20).

5) A joint as in claim 1, characterized in that the elements(45,46) fastening the metal plate(39) to the components(36) of the armour(35) of the second cable(29) comprise a plurality of slits(43), passing through said plate(39), whose axes lie in uniformly spaced relationship along a circumference coaxial to the plate(39) axis, into which pass the components(36) of the armour of the second cable(29) whose end portions are folded against the plate surface directed towards the first cable-(28) and a ring(45), coaxial to the plate(39), provided with means(46) to be fastened to the latter, said ring(45) blocking against the plate(39) surface directed to the first cable(28) the end portions of the components(36) of the armour(35) of the second cable(29) folded onto it.

6) A joint as in claim 1, characterized in that it comprises a sleeve(40) to clamp on the end of the second cable(29) the components(36) of its armour(35) and an annular spacer(44) interposed between the end of the second cable(29) and the metal plate(39), on which the components(36) of said armour(35) lean before being engaged with the fastening elements(45,46) to the metal plate-(39).

P. 564

Fig. 1

Fig. 2

Fig. 3

Fig. 4

P. 564

Fig. 5

Fig. 7

Fig. 6

0 280 988